# EUROPÄISCHE PATENTSCHRIFT

(11) **EP 1 158 722 B1**
(45) Veröffentlichungstag und Bekanntmachung des Hinweises auf die Patenterteilung: **27.07.2005**
(21) Anmeldenummer: 01111507.8
(22) Anmeldetag: 11.05.2001
(51) Int. Cl.: H04L 12/40, H04L 12/46, B60R 16/02

(54) **Schaltungsanordnung für ein Kraftfahrzeug**
Circuit arrangement for a motor vehicle
Circuit pour un véhicule à moteur

(30) Priorität: 26.05.2000 DE 10026124
(43) Veröffentlichungstag der Anmeldung: 28.11.2001
(73) Patentinhaber: Bayerische Motoren Werke Aktiengesellschaft, 80809 München (DE)
(72) Erfinder: Fröschl, Joachim, 82229 Seefeld (DE); Kaltenbrunner, Martin, 84416 Taufkirchen (DE); Bader, Richard, 80999 München (DE)

(56) Entgegenhaltungen:
- WO-A-91/13504
- DE-A- 19 843 447

## Beschreibung

Die Erfindung bezieht sich auf eine Schaltungsanordnung für ein Kraftfahrzeug nach dem Oberbegriff des Patentanspruchs 1.

Eine derartige Schaltungsanordnung ist beispielsweise aus der DE 196 00 644 A1 bekannt. Diese bekannte Schaltungsanordnung weist zwei Bussysteme und ein gemeinsames Gateway auf, das aus zwei zu einer Zentraleinheit zusammengefaßten intelligenten Steuergeräten besteht. Die Steuergeräte können auch jeweils ein Funktionsmodul sein. Jedem Steuergerät dieser Zentraleinheit ist ein Bussystem zugeordnet. Zum bus-übergreifenden Austausch der Daten weisen die Steuergeräte eine definierte Schnittstelle auf. Bei dieser bekannten Schaltungsanordnung steht die Flexibilität im Vordergrund. Eine Fehlerbehandlung wird nicht erwähnt.

In Zukunft sollen in zunehmenden Maße vorzugsweise linear aufgebaute unterschiedliche Bussysteme in Kraftfahrzeugen miteinander vernetzt werden, denen insbesondere eine logische Ringstruktur überlagert werden sollen. D.h. die Funktionsmodule senden bus-übergreifend in vorgegebener Reihenfolge nacheinander. Hierbei wirkt sich eine Transferunterbrechung zwischen den Bussystemen besonders unangenehm aus, da das gesamte Netz gestört wird.

Die WO 91 13504 A beschreibt eine Netzwerk-Kopplungsvorrichtung für ein LAN zum unabhängigen Betrieb von Netzwerk-Abschnitten. Im Fehlerfall veranlasst ein Kontroll-Signal die Vorrichtung zur Trennung der Netzwerk-Abschnitte voneinander, d.h. einem oder mehreren Netzwerkabschnitten wird der Weiterbetrieb ermöglicht, wenn Fehler in ein oder mehreren anderen Netzwerkabschnitten auftreten.

Der Erfindung liegt die Aufgabe zu Grunde, in Kraftfahrzeugen mit busübergreifender Kommunikation die Verfügbarkeit der Kraftfahrzeugfunktionen zu erhöhen.

Diese Aufgabe wird durch die Merkmale des Patentanspruchs 1 gelöst. Vorteilhafte Weiterbildungen der Erfindung sind die Gegenstände der abhängigen Ansprüche.

Die erfindungsgemäße Schaltungsanordnung für ein Kraftfahrzeug weist eine Mehrzahl von Funktionsmodulen auf, die auf mindestens zwei Bussysteme aufgeteilt sind. Die Bussysteme ihrerseits sind über ein gemeinsames Gateway verbunden. Das Gateway weist für jedes Bussystem jeweils einen Empfangskanal und einen Sendekanal auf. Das Gateway weist weiterhin Prüfmittel auf, durch die ein erfolgreiches Senden von Daten zu einem Funktionsmodul eines Datenbussystems bzw. ein erfolgreiches Empfangen von Daten von einem Funktionsmodul eines Datenbussystems überprüft wird. Schließlich weist das Gateway Sperrmittel auf, durch die der Empfangskanal gesperrt wird, wenn das Senden nicht erfolgreich war, bzw. der Sendekanal gesperrt wird, wenn das Empfangen nicht erfolgreich war.

Diese Empfangs- bzw. Sendesperre verhindert beispielsweise, daß Ringnachrichten des Bussystems mit dem defekten Sende- bzw. Empfangskanal auf den anderen Bussystemen erscheinen. Somit wird eine Unterbrechung des logischen Ringes für alle Bussysteme sofort erkennbar. Der logische Ring über alle Bussysteme wird daher gezielt aufgegeben und eine neue logische Struktur wird unter Berücksichtigung des gesperrten Bussystems derart neu formiert, daß Ringnachrichten nur über die nicht gesperrten Bussysteme bus-übergreifend weitergegeben werden. Das gesperrte Bussystem arbeitet entkoppelt für sich weiter. Somit werden rechenzeitintensive Störungsroutinen beim Datentransfer weitgehend vermieden.

Ergänzend wird daraufhin gewiesen, daß die Empfangs- und Sendesperre auch aus anderen Gründen erfolgen kann, z. B. durch Applikations- oder Diagnosefunktionen.

In einer vorteilhaften Ausgestaltung der Erfindung weist das Gateway Wiederholungsmittel auf, durch die das Senden von Daten über den dem gesperrten Empfangskanal zugeordneten Sendekanal bzw. durch die das Empfangen von Daten über den dem gesperrten Sendekanal zugeordneten Empfangskanal zu vorgegebenen Bedingungen wiederholt versucht wird. Das Gateway öffnet die Sperrmittel, wenn die erneuten Sendeversuche bzw. Empfangsversuche erfolgreich sind.

Durch ein derartiges "Wiederbelebungsverfahren" wird die Verfügbarkeit weiter erhöht, da ein Notlauf in Form der Neuformierung der Bussysteme, der zumindest zu geringen Funktionseinschränkungen führen kann, nicht unnötig lange aufrecht erhalten wird.

Vorzugsweise ist das Gateway eine integrierte Zwischeneinheit zwischen den am Gateway angeschlossenen Bussystemen und einem weiteren Funktionsmodul. Das weitere Funktionsmodul wird als eigenes Bussystem in Form eines virtuellen Busses betrachtet. Das Gateway und das weitere Funktionsmodul können eine Zentraleinheit bilden, die nur eine CPU aufweist.

In der Zeichnung ist ein Ausführungsbeispiel der Erfindung dargestellt. Es zeigt
- Fig. 1: eine mögliche erfindungsgemäße Schaltanordnung mit zwei tasächlichen Bussystemen sowie einem virtuellen Bussystem und
- Fig. 2: einen vereinfachten Logikplan zur Durchführung der Prüf-, Sperr-, Wiederholungs- und Entsperrmaßnahmen des Gateways.

Ein schnelles Bussystem A, das z. B. dem Antriebsmanagement zugeordnet ist, weist drei intelligente Funktionsmodule 2, 3, 5 (z. B. ein Motorsteuergerät, ein Getriebesteuergerät und ein Bremssteuergerät) auf. Ein gegenüber dem Bussystem A langsameres Bussystem B, das z. B. dem Karosseriemanagement zugeordnet ist, weist weitere drei intelligente Funktionsmodule 1, 4, 6 (z. B. ein Lichtsteuergerät, ein Klimaanlagensteuergerät und ein Sitzverstellungssteuergerät) auf. Die zwei Bussysteme A und B sind über ein gemeinsames Gateway 8 verbunden. Das Gateway 8 ist eine integrierte Zwischeneinheit zwischen den Bussystemen A und B sowie einem weiteren Funktionsmodul 7. Das weitere Funktionsmodul 7 wird als eigenes virtuelles Bussystem C betrachtet. Das Gateway 8 und das weitere Funktionsmodul 7 bilden eine Zentraleinheit 9. Das Funktionsmodul 7 bzw. das virtuelle Bussystem C sind für die Erfindung jedoch nicht zwingend erforderlich. Auch könnten am Gateway 8 noch weitere Bussysteme angeschlossen sein.

Das Gateway 8 weist für jedes Bussystem A, B, C jeweils einen Empfangskanal E_{A}, E_{B}, E_{C} und einen Sendekanal S_{A}, S_{B}, S_{C} sowie hier nicht dargestellte Prüfmittel, Sperrmittel und Wiederholungsmittel auf.

Durch die Prüfmittel im Gateway 8 wird ein erfolgreiches Senden bzw. Empfangen über die Sendekanäle bzw. Empfangskanäle überprüft. Im Folgenden wird beispielsweise von einem überlagerten logischen Ring entsprechend der Reihenfolge der Funktionsmodul-Nummerierung 1 bis 7 ausgegangen. Das Funktionsmodul 1 vom Bus B sendet also bus-übergreifend Daten zum Funktionsmodul 2 des Busses A. Das Funktionsmodul 2 vom Bus A sendet innerhalb desselben Busses Daten zum Funktionsmodul 3. Das Funktionsmodul 3 vom Bus A sendet bus-übergreifend Daten zum Funktionsmodul 4 des Busses B. Das Funktionsmodul 4 vom Bus B sendet bus-übergreifend Daten zum Funktionsmodul 5 des Busses A. Das Funktionsmodul 5 vom Bus A sendet bus-übergreifend Daten zum Funktionsmodul 6 des Busses B. Das Funktionsmodul 6 vom Bus B sendet bus-übergreifend Daten zum Funktionsmodul 7 des virtuellen Busses C. Das Funktionsmodul 7 vom Bus C sendet bus-übergreifend Daten zum Funktionsmodul 1 des Busses B. Somit ist der Ring geschlossen und beginnt von Neuem.

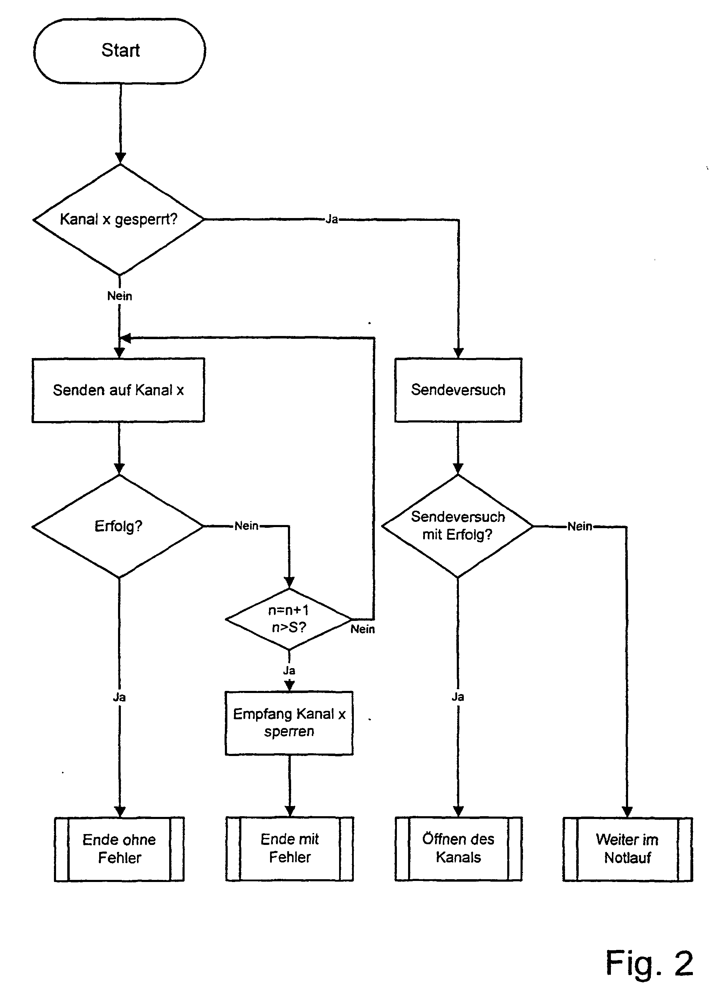

Beispielsweise vor dem Senden von Daten vom Funktionsmodul 3 des Busses A zum Funktionsmodul 4 des Busses B sei der Sendekamal S_{B} defekt geworden. Fig. 2 wird im Zusammenhang mit diesem Fehlerbeispiel erläutert.

Im Folgenden werden der Sendekanal S_{A} und der Empfangskanal E_{A} zu einem Kanal a, der Sendekanal S_{B} und der Empfangskanal E_{B} zu einem Kanal b und der Sendekanal S_{C} und der Empfangskanal E_{C} zu einem Kanal c zusammengefaßt. Gemäß Fig. 2 wird vom Gateway 8 zunächst geprüft, ob ein Kanal x (x= a,b,c), also z. B. Kanal b, gesperrt ist. Diese Abfrage bezieht sich insbesondere auf ein aktives Sperren des Empfangskanals E_{B} oder auf ein aktives Sperren des Sendekanals S_{B}. Beim erstmaligen Auftreten des genannten Fehlerfalles wird diese Abfrage zunächst verneint.

Nachdem gemäß dem Fehlerbeispiel die Daten des Funktionsmoduls 3 nicht über Kanal b zum Funktionsmodul 4 gesandt werden können, erhält das Gateway 8 vom Funktionsmodul 4 kein Bestätigungssignal für den Empfang der Daten. Das Senden war also nicht erfolgreich. Gemäß Fig. 2 kann abgefragt werden (n=n+1; n>S), ob ein nicht erfolgreiches Senden schon für eine vorgegebene Anzahl S von Sendeversuchen vorgenommen wurde. Wenn dies der Fall ist, wird durch die Sperrmittel vom Gateway 8 der Empfang von allen Daten des Busses B durch Schließen des Empfangskanals E_{B} gesperrt. Somit ist der Kanal b gesperrt.

Der logische Ring 1 bis 7 über alle Bussysteme A, B, C wird dann gezielt aufgegeben und eine neue logische Struktur wird unter Berücksichtigung des gesperrten Bussystems B derart neu formiert, daß Ringnachrichten nur über die nicht gesperrten Bussysteme A, C bus-übergreifend weitergegeben werden. Den Bussystemen A, C kann beispielsweise ein neuer logischer Ring, z. B. 2=>3=>5=>7=>2 usw., überlagert werden. Das gesperrte Bussystem B arbeitet entkoppelt für sich weiter, z. B. 1=>4=>6=>1 usw.. Erfindungsgemäß treten beim genannten Fehlerbeispiel keine Störungen dadurch auf, daß der logische Ring ständig zusammenbricht und versucht sich neu aufzubauen.

Wird nach einem erneuten Start der Routine, z. B. bei einer neuen Inbetriebnahme des Kraftfahrzeuges oder nach einer vorgegebenen Zeitdauer, festgestellt, daß der Kanal b bzw. der Empfangskanal E_{B} gesperrt ist, wird vom Gateway 8 durch die Wiederholungsmittel vom Gateway 8 über diesen Kanal b ein Sendeversuch gestartet. Ist der Sendeversuch erfolgreich, wird also z. B. von einem vorgegebenen Empfangs-Funktionsmodul des Bussystems B ein Bestätigungssignal erhalten, öffnet das Gateway 8 die Sperrmittel wieder, um den Empfang der Daten vom Bus B wieder zu ermöglichen. Ist der erneute Sendeversuch nicht erfolgreich, bleibt der Empfangkanal E_{B} gesperrt.

Analog wird bei einem defekten Empfangskanal der zugehörige Sendekanal gesperrt. Die Empfangsbereitschaft bleibt jedoch erhalten, um bei einer Wiederbelebung des Empfangskanals sofort reagieren zu können. Ist der Empfangskanal wieder hergestellt, muß auch der zugehörige Sendekanal wieder geöffnet werden.

## Patentansprüche

1. Schaltungsanordnung für ein Kraftfahrzeug, die eine Mehrzahl von Funktionsmodulen aufweist, die über mindestens zwei Bussysteme mit einem gemeinsamen Gateway verbunden sind, das Gateway (8) für jedes Bussystem (A, B, C) jeweils einen Empfangskanal (E_{A}, E_{B}, E_{C}) und einen Sendekanal (S_{A}, S_{B}, S_{C}) aufweist, daß das Gateway (8) Prüfmittel aufweist, durch die ein erfolgreiches Senden von Daten zu einem Funktionsmodul (2, 3, 5; 1, 4, 6; 7) eines Datenbussystems (A; B; C) bzw. ein erfolgreiches Empfangen von Daten von einem Funktionsmodul eines Datenbussystems überprüft wird, **dadurch gekennzeichnet, daß** das Gateway Sperrmittel aufweist, durch die der Empfangskanal gesperrt wird, wenn das Senden nicht erfolgreich war bzw. der Sendekanal gesperrt wird, wenn das Empfangen nicht erfolgreich war, wobei der Sende- und Empfangskanal nicht gleichzeitig gesperrt werden.

2. Schaltungsanordnung nach Patentanspruch 1, **dadurch gekennzeichnet, daß** das Gateway (8) Wiederholungsmittel aufweist, durch die das Senden von Daten über den dem gesperrten Empfangskanal zugeordneten Sendekanal bzw. das Empfangen von Daten über den dem gesperrten Sendekanal zugeordneten Empfangskanal zu vorgegebenen Bedingungen wiederholt versucht wird, und daß das Gateway (8) die Sperrmittel öffnet, wenn die erneuten Sendeversuche bzw. Empfangsversuche erfolgreich sind.

3. Schaltungsanordnung nach Patentanspruch 1 oder 2, **dadurch gekennzeichnet, daß** das Gateway (8) eine integrierte Zwischeneinheit zwischen den am Gateway (8) angeschlossenen Bussystemen (A, B) und einem weiteren Funktionsmodul (7) ist und das weitere Funktionsmodul (7) ein weiteres Bussystem (C) ist.

4. Schaltungsanordnung nach Patentanspruch 3, **dadurch gekennzeichnet, daß** das Gateway (8) und das weitere Funktionsmodul (7) eine Zentraleinheit (9) bilden.

## Claims

1. A circuit arrangement for a motor vehicle which has a plurality of functional modules, which are connected to a common gateway via at least two bus systems, the gateway (8) for each bus system (A, B, C) in each case has a receiving channel (E_{A}, E_{B}, E_{C}) and a transmitting channel (S_{A}, S_{B}, S_{C}), in that the gateway (8) has checking means, by means of which a successful transmission of data to a functional module (2, 3, 5; 1, 4, 6; 7) of a data bus system (A; B; C) or a successful reception of data from a functional module of a data system is checked, **characterised in that** the gateway has blocking means, by means of which the receiving channel is blocked when transmitting was not successful or the transmitting channel is blocked when receiving was not successful, the transmitting and receiving channel not being blocked simultaneously.

2. A circuit arrangement according to claim 1, **characterised in that** the gateway (8) has repetition means, by means of which the transmitting of data via the transmitting channel associated with the blocked receiving channel or the receiving of data via the receiving channel associated with the blocked transmitting channel is repeatedly attempted under predetermined conditions, and **in that** the gateway (8) opens the blocking means when the renewed transmitting attempts or receiving attempts are successful.

3. A circuit arrangement according to claim 1 or 2, **characterised in that** the gateway (8) is an integrated intermediate unit between the bus systems (A, B) connected to the gateway (8) and a further functional module (7) and the further functional module (7) is a further bus system (C).

4. A circuit arrangement according to claim 3, **characterised in that** the gateway (8) and the further functional module (7) form a central unit (9).

## Revendications

1. Circuit pour un véhicule automobile qui présente une pluralité de modules fonctionnels reliés à une passerelle commune par au moins deux systèmes de bus, dans lequel la passerelle (8) présente pour chaque système de bus (A, B, C) un canal de réception (E_{A}, E_{B}, E_{C}) et un canal d'émission (S_{A}, S_{B}, S_{C}), la passerelle (8) présente des moyens de contrôle permettant de vérifier une émission réussie de données vers un module fonctionnel (2, 3, 5 ; 1, 4 ; 6 ; 7) d'un système de bus de données (A ; B ; C) ou une réception réussie de données par un module fonctionnel d'un système de bus de données,
**caractérisé en ce que**
la passerelle présente des moyens de blocage pour bloquer le canal de réception si l'émission a échoué ou le canal d'émission est bloqué si la réception a échoué, les canaux d'émission et de réception n'étant pas bloqués simultanément.

2. Circuit selon la revendication 1,
**caractérisé en ce que**
la passerelle (8) présente des moyens de répétition permettant à des conditions prédéterminées des tentatives répétées pour envoyer des données par le canal d'émission associé au canal de réception bloqué ou pour recevoir des données par le canal de réception associé au canal d'émission bloqué, et la passerelle (8) ouvre les moyens de blocage si les nouvelles tentatives d'émission ou de réception sont réussies.

3. Circuit selon la revendication 1 ou 2,
**caractérisé en ce que**
la passerelle (8) est une unité intermédiaire intégrée entre les systèmes de bus (A, B) connectés à la passerelle (8) et un autre module fonctionnel (7), et l'autre module fonctionnel (7) est un autre système de bus (C).

4. Circuit selon la revendication 3,
**caractérisé en ce que**
la passerelle (8) et l'autre module fonctionnel (7) forment une unité centrale (9).
